# DEMANDE DE BREVET EUROPEEN

(11) **EP 2 168 704 A1**
(43) Date de publication de la demande: **31.03.2010**
(21) Numéro de dépôt: 08380260.3
(22) Date de dépôt: 29.08.2008
(51) Int. Cl.: B23D 57/00, B28D 1/08

(54) **Machine à fil mobile pour le découpage de pierre**

(71) Demandeur: Los Bolillas, S.L., 30400 Caravaca (Murcia) (ES)
(72) Inventeur: Martinez Romero, D. Francisco, 30400 Caravaca (Murcia) (ES)
(74) Mandataire: Manzano Cantos, Gregorio

(57) **Abrégé**

MACHINE À FIL MOBILE POUR LE DÉCOUPAGE DE PIERRE comprenant un véhicule autopropulsé avec des moyens d'entraînement et déplacement approprié pour s'adapter à tout type de terrains avec des trains de roulage à base de chenilles (4) dans laquelle est intégrée, de manière stable et fixe, toute une structure (2) de la machine de découpage (1), y compris la voie (5) pour la mobilité du chariot de déplacement (6) des poulies d'entraînement et mise en tension du fil de coupe (4), dont la voie se prolonge hors du corps de la machiné dans une extension plus que suffisante pour que la course du chariot de déplacement soit suffisante pour réaliser le découpage de la pierre dans une dimension initiale, qui peut être totale ou partielle, en disposant dans ce dernier cas de la faculté que permet l'autonomie de déplacement de la machine, pour la remettre en place à la distance, autant de fois que nécessaire, pour compléter le découpage.

## Description

### OBJET DE L'INVENTION

C'est une des machines typiques de découpage de pierre du type utilisé dans les carrières, à l'intempérie, qui utilise comme outil de découpage un fil diamanté et qui sont équipées d'un bloc hydraulique et d'un tableau électrique de commande et de contrôle d'opérations pour bouger un volant d'inertie de force qui fait tourner le fil associé à un chariot d'entraînement et tendu de celui-ci qui a une course déterminée de déplacement et un autre ensemble d'éléments guidés pour la sortie (aller) et retour du fil de coupe.

### DESCRIPTION DE LA MACHINE

Selon l'invention c'est une machine de découpage par fil diamanté pour des travaux d'extraction de pierre naturelle dans des carrières, dont le principe de fonctionnement est connu et utilisé dans différents équipements existants dans l'état de l'art et sur le marché, mais incorporant des avantages spéciaux en ce qui concerne la manipulation et la capacité de déplacement de l'équipement.
Le travail avec l'équipement de l'invention comprend deux phases différenciées :

### LA PHASE DE PREPARATION ET LA PHASE DE DÉCOUPAGE

Dans chacune desdites phases, l'équipement incorpore des nouveautés et d'importantes améliorations par rapport à d'autres équipements existant sur le marché.

La phase de préparation comprend tous les travaux de déplacement d'un point à un autre du chantier, installation de la machine et mise en place du fil à couper, en entendant par installation, l'adaptation de la machine au terrain et l'orientation de la poulie principale et les poulies de guidage au découpage voulu. Dans cette phase la machine comprend des améliorations importantes :

La première et la plus importante est l'autonomie de mouvement, car l'équipement est autopropulsé par des trains de roulage qui lui confèrent la mobilité et l'adaptation nécessaires pour se déplacer et se mettre en place de manière agile et efficace d'in point à un autre de travail, sans la nécessité d'équipements auxiliaires pour son transport.

La deuxième avantage est sa capacité d'être installée de manière immédiate car le bâtit principal incorpore tous les ancrages et supports nécessaires pour l'installation d'accessoires et de poulies de guidages, en ayant également la capacité de permettre la correction du dénivelé du terrain ou bien orienter la poulie par rapport au découpage grâce aux appuis stabilisateurs.

La phase de découpage comprend le travail utile de la machine, dans laquelle on déconnecte le système de mouvement, et on démarre le moteur principal et le système d'entraînement de fil (le système électrique incorpore des éléments de sécurité pour empêcher que les deux systèmes travaillent en même temps).

La nouveauté incorporée dans ce cas est la manière dont la machine réalise la gestion d'entraînement du fil: tandis que la poulie principale qui transmet directement le mouvement du moteur principal fournit le mouvement linéaire du fil, le chariot où sont installées deux poulies de guidage se déplace par la voie principale en provocant l'entraînement du fil, cela est illustré dans les dessins.

Le système qui gère le mouvement d'entraînement et contrôle la tension du fil en fonction de la consommation principal du moteur est le même que celui des autres modèles de découpage par fil de la même demanderesse, la nouveauté incorporée est le fait que le mouvement d'entraînement est réalisé par deux poulies de guidage, de manière que lors de chaque déplacement du chariot on absorbe le double de fil.

### ANTÉCÉDENTS DE L'INVENTION

Les machines de ce types que nous pouvons trouver dans l'état de l'art sont plusieurs et diverses de celles-ci sont de la même demanderesse. Los Bolillas, S.A, que celui de cette invention parmi lesquelles nous pouvons signaler :
1.- U ES 1034264 « MAQUINA DE HILO PARA EL CORTE DE PIEDRA » qui est une première version déplaçable sur des voies qui a un banc fixe comme coulisseau d'entraînement.
2.- U ES 104818 «CABEZAL AUTOMATICO DE MAQUINAS CORTADORAS DE PIEDRA POR HILO DIAMANTADO » qui comme le dit le titre est une tête qui opère automatiquement dans les diverses fonctions de la tête de coupe.
3.- U ES 104817 « CORTADORA DE PIEDRA NATURAL POR HILO DIAMANTADO DE CABEZAL REVERSIBLE », qui a la particularité que la tête de coupe peut être située latéralement ou frontalement pour découper dans différentes directions.
4.- P ES 2167233 BANQUEADOR DE HILO DIAMANTADO PARA EL CORTE DE PIEDRA NATURAL GRANITO O SIMILARES qui a des propriétés pour le déplacement et l'entraînement pour sa situation dans l'espace du découpage.
5.- P ES 2190361 A2 « BANQUEADOR PLEGABLE AUTONOMO DE HILO DIAMANTADO PARA EL CORTE DE PIEDRA NATURAL, GRANITO O SIMILARES qui est un ensemble articulé pouvant se plier pour réduire l'encombrement de transport pour déplacer la machine d'un point à un autre avec facilité.

### DESCRIPTION DE L'INVENTION

L'objet de l'invention de la manière exposée serait intégré par un véhicule autopropulsé avec des moyens d'entraînement et déplacement approprié pour s'adapter à tout type de terrains, comme il est le cas essentiellement de trains de roulage à base de chenilles, sur laquelle est intégrée de manière stable et fixe toute la structure de la machine de découpage y compris la voie pour la mobilité du chariot de déplacement des poulies d'entraînement et mise en tension du fil, dont la voie se prolonge hors du corps de la machine dans une extension plus que suffisante pour que la course du chariot de déplacement soit suffisant pour réaliser le découpage de la pierre dans une dimension initiale, qui peut être totale ou partielle (en fonction de la dimension du bloc de pierre), en disposant dans ce dernier cas de la faculté avantageuse du fait que l'autonomie de déplacement de la machine permet de la remettre en place à la distance, autant de fois que nécessaire pour compléter le découpage.

La machine de l'invention est un seul ensemble autopropulsé et autonome. Dans lequel est concentrée une structure métallique assise sur un bâti qui contient un système d'appuis réglables constitué de préférence par quatre appuis, deux arrière et deux avant, qui élèvent l'ensemble depuis quatre points pour son nivellement sur deux axes, et qui servent à établir l'équilibrage ou nivellement horizontal de l'ensemble sur le terrain irrégulier et dont la structure distingue principalement la voie pour le déplacement du chariot d'entraînement qui s'étend, pratiquement, depuis la tête de l'ensemble et qui est en vol à faux par derrière dans une extension considérable qui est équilibrée (même avec la charge du chariot et la contrainte mécanique de l'entraînement), par rapport à la différence plus que suffisante de contrepoids que suppose ou représente le reste de l'ensemble, les tirants [de préférences en (<)] partant du bâti servant d'appui à la partie en vol à faux de la voie.

Une autre caractéristique avantageuse de l'invention est que dans ladite structure autoportante elle comporte le moteur principal qui entraîne la poulie principale située sur la tête de la voie ; les organes mécaniques du système de déplacement du chariot sur ladite voie ; la centrale hydraulique ou distributeur hydraulique de l'ensemble mécanique ; le tableau électrique et l'alimentation par le panneau externe d'opérations. À l'extrémité avant, situé devant le volant principal, se trouve un double jeu de poulies de guidage par-dessus et par-dessous ledit volant pour guider l'aller et le retour du fil de coupe ; et sur la voie, le chariot de déplacement synchronisé avec le moteur principal, pourvu d'un double jeu de poulies d'entraînement, situées au-dessus et au-dessous de ce chariot, pour la sortie et le retour du fil qui les entraîne et met en tension le long du déplacement pour que le découpage soit efficace. En permettant de la sorte la duplication de l'entraînement du fil, la circulation de celui-ci par la poulie principale et les deux d'entraînement.

Un autre détail de l'invention est le fait que les jeux respectifs de poulies de guidage et d'entraînement sont protégées, la supérieure dans le premier cas et les deux dans le deuxième cas, au moyen de platines garde-fil situées à une position tangentielle supérieure dans le premier cas et latérale dans le deuxième cas en présentant le premier une sortie (réglable) ascendante pour la meilleure protection du fil. Cet aménagement double des poulies augmente considérablement les options de découpage, en étant possible d'attaquer des volumes plus grands de pierre qui selon les caractéristiques de la machine est possible de faire lors d'une seule opération ou dans diverses opérations successives étant donné la capacité de remise en place autonome de la machine.

### DANS LES DESSINS

La figure 1 est une perspective de l'ensemble de la machine ouverte vue en perspective latérale et en plan du côté droit.

La figure 2 est une perspective de l'ensemble de la machine fermée vue en perspective latérale et en plan du côté droit.

La figure 3 est une vue en plan supérieure de l'ensemble de la machine de la figure 1.

La figure 4 est une vue schématique de la projection latérale dé la machine et une opération de découpage dans sa phase initiale.

La figure 5 est une vue schématique en projection latérale de la machine et une opération de découpage dans sa phase avancée.

### MISE EN OEUVRE PRÉFÉRÉE DE L'INVENTION

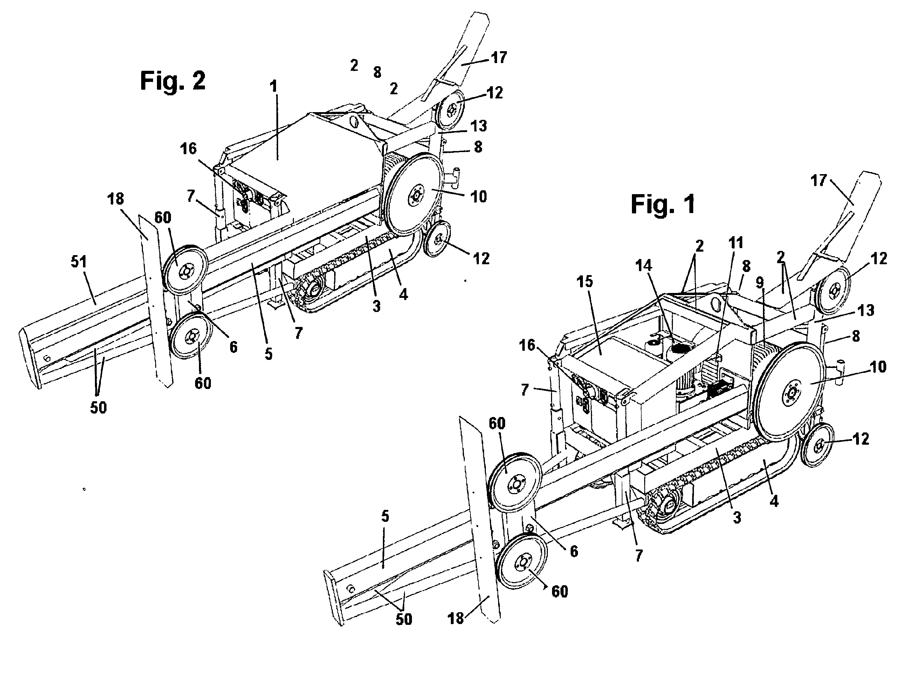

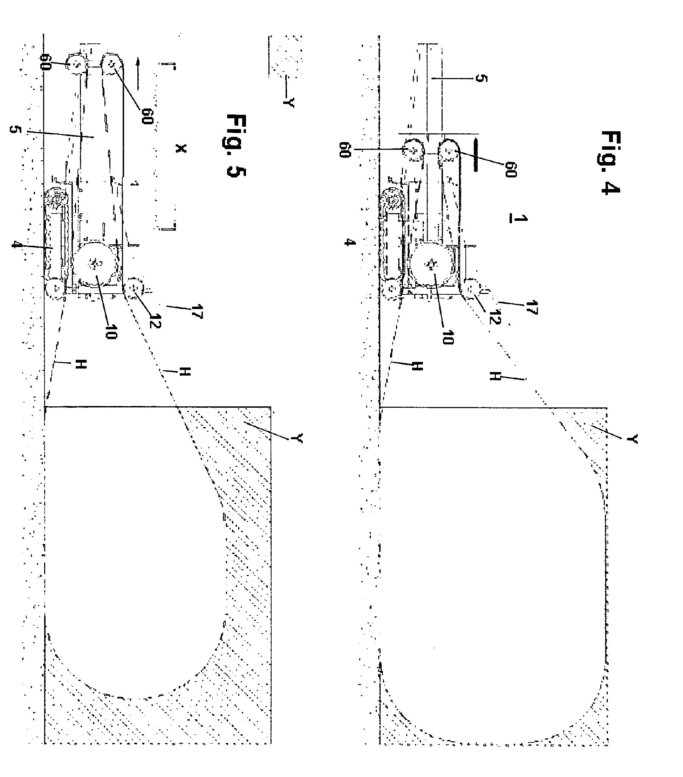

Une mise en oeuvre préférée de l'invention est représentée dans les dessins antérieurs et développée de manière détaillée dans la description de l'invention et qui selon ledit exposé comprend un ensemble de machine autopropulsée de manière générale indiquée par (1) la structure ou armature étant la même (2) que nous voyons dans la figure 1, avec le bâti de sustentation (3) correspondant et un train de roulage à base de chenilles (4) qui sont celles qui garantissent un déplacement sur des terrains irréguliers, la voie longitudinale (5) et un carénage de protection (51) étant adossées latéralement depuis l'extrémité antérieure de (2) et (3) jusqu'à une extension postérieure en vol à faux qui est supérieure à la première, qui est sustentée par des tirants (50) de préférence projection de (<) par où se déplace le chariot de glissement (6) pour l'entraînement et la mise en tension du fil de coupe (H) que nous voyons dans les figures 5 et 6.

Dans la partie postérieure de la structure (2) est monté le système d'appuis réglables (7).

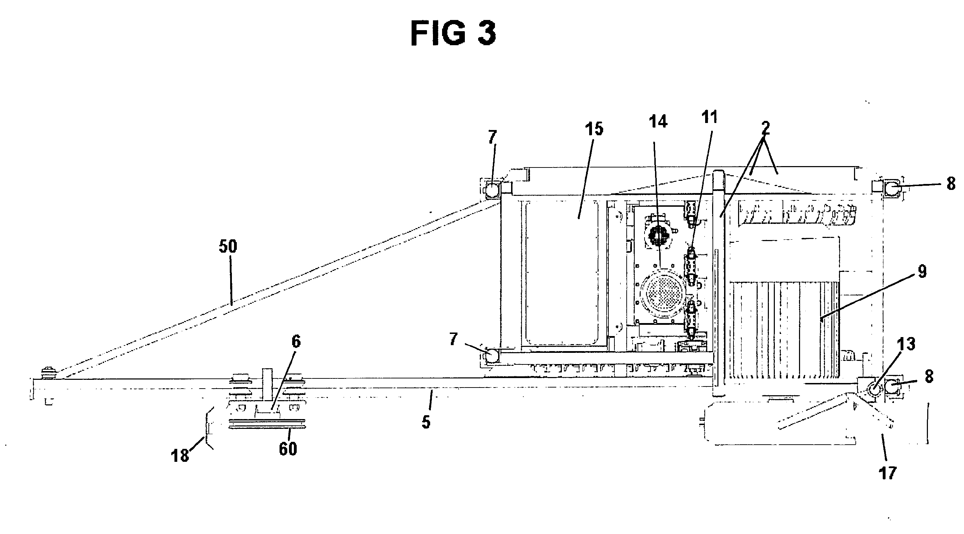

Un jeu d'appui arrière et un autre jeu d'appuis avant (8), constitués par quatre appuis, de préférence, pour établir le nivellement horizontal et le cas échéant l'alignement des poulies qui déplacent et guident le fil de coupe (H), selon l'on peut les voir adéquatement distribuées dans la figure 3.

Dans ladite structure (2) est monté le moteur principal (9) qui entraîne la poulie principale (10) située à l'extrémité antérieure du guide (5) et le système de déplacement (11) du chariot glissant (6) qui est synchronisé avec le moteur principal (9) et qui comporte un double jeu de poulies (60) d'entraînement et de mise en tension du fil (H) en coordination avec la poulie principale (10), situées au-dessus et au-dessous du chariot de déplacement (6) et en projection avec le double jeu de poulies de guidage (12) montées sur un support antérieur (13) de la structure générale (2) dans laquelle sont intégrés la centrale hydraulique (14) du mécanisme ; le tableau électrique (15) et l'alimentation (16) pour le panneau d'extérieur et sans commandes (no représenté), mais qui comporte essentiellement :
la base d'alimentation électrique.
la base d'interconnexion de centrale de commandes.
l'inverseur de rotation de centrale hydraulique
la base auxiliaire.
La commande d'arrête d'émergence.
Bouton-poussoir de marche (remise en circuit)
Actionnement du moteur principal
Système de protection du fil.
Réglage de l'intensité de travail
Indicateur de consommation électrique (A)
Réglage de la vitesse du fil
Indicateur de la vitesse du fil (m/s).
Bouton-poussoir de tir manuel
Indicateur de panne du variateur
Indicateur de panne par rupture de fil.
Indicateur de panne de la centrale hydraulique.

Le jeu de poulies d'entraînement (60) et de guidage (12), comporte des garde-fils (18) et (17) respectivement situés dans une position tangentielle latérale dans le premier cas et tangentielle supérieure dans le deuxième cas pour garantir une protection appropriée du fil (H).

Dans la figure 5 on établit une portion rayée (x) qui correspond à la partie coupée de la pierre des figures 4 et 5 et une cote (y) qui marque la course du chariot de déplacement (6) pour la réalisation dudit découpage.

## Revendications

1. MACHINE À FIL MOBILE POUR LE DÉCOUPAGE DE PIERRE comprenant un véhicule autopropulsé avec des moyens d'entraînement et déplacement approprié pour s'adapter à tout type de terrains qui est **CARACTÉRISÉE EN CE QUE** ces moyens d'entraînement sont des trains de roulage à base de chenilles (4) dans laquelle est intégrée, de manière stable et fixe, toute une structure (2) de la machine de découpage (1), y compris la voie (5) pour la mobilité du chariot de déplacement (6) des poulies d'entraînement et mise en tension du fil de coupe (H), dont la voie (5) se prolonge hors du corps de la machine (1) dans une extension plus que suffisante pour que la course (y) du chariot (6) de déplacement soit suffisante pour réaliser le découpage (x) de la pierre dans une dimension initiale, qui peut être totale ou partielle, en disposant ainsi de la faculté permettant à la machine (1) de se remettre en place à la distance, autant de fois que nécessaire, pour compléter le découpage (x).

2. MACHINE À FIL MOBILE POUR LE DÉCOUPAGE DE PIERRE selon la revendication 1, la machine, un seul ensemble autopropulsé et autonome qui est concentrée dans une structure métallique qui est **CARACTÉRISÉE EN CE QU**'elle est assise sur un bâti (3) qui contient un système d'appuis réglables, deux appuis arrière (7) et deux appuis avant (8), qui servent à établir l'équilibrage ou nivellement horizontal de l'ensemble (1) et sur la structure (2) de laquelle on distingue la voie (5) protégé par un carénage (51), pour le déplacement du chariot de d'entraînement (6), les tirants (50) en (<), qui partent du bâti (3) servant d'appui à la partie en vol à faux de la voie (5).

3. MACHINE À FIL MOBILE POUR LE DÉCOUPAGE DE PIERRE selon la revendication 1 ladite structure autoportante est **CARACTÉRISÉE EN CE QU**'elle comporte le moteur principal (9) qui entraîne la poulie principale (10) située sur la tête de la voie (5); le système (11) de déplacement du chariot (6) sur ladite voie (5) ; la centrale hydraulique ou distributeur hydraulique (14) de l'ensemble mécanique ; le tableau électrique (15) et l'alimentation (16) pour le panneau externe d'opérations ; comprenant à l'extrémité avant, situé devant le volant principal (10), un double jeu de poulies de guidage (12), par-dessus et par-dessous ledit volant (10) pour guider l'aller et le retour du fil de coupe (H) dans laquelle on absorbe le double fil (H) pour l'option de découpage de la pierre ; et sur la voie (5), le chariot de déplacement (6) synchronisé avec le moteur principal (9), est pourvu d'un double jeu de poulies d'entraînement (60), situées au-dessus et au-dessous de ce chariot (6), pour la sortie et le retour du fil (H) qui l'entraîne et met en tension le long du déplacement.

4. MACHINE À FIL MOBILE POUR LE DÉCOUPAGE DE PIERRE selon la revendication 1 dont les jeux respectifs de poulies, de guidage et d'entraînement sont **CARACTÉRISÉS EN CE QU**'elles sont protégées, la supérieure dans les poulies de guidages (12) et les deux poulies dans les poulies d'entraînement (60), au moyen de platine garde-fil (17) et (18) situées respectivement à une position tangentielle supérieure dans le premier cas et latérale dans le deuxième cas, le premier présentant une sortie (réglable) ascendante pour la meilleure protection du fil (H).
